# EUROPÄISCHE PATENTANMELDUNG

(11) **EP 2 671 817 A1**
(43) Veröffentlichungstag der Anmeldung: **11.12.2013**
(21) Anmeldenummer: 13170692.1
(22) Anmeldetag: 05.06.2013
(51) Int. Cl.: B65D 59/02

(54) **Vorrichtung zum Stabilisieren der Enden von Kunststoffrohren**

(30) Priorität: 05.06.2012 DE 202012102055 U
(71) Anmelder: Gerodur MPM Kunststoffverarbeitung GmbH & Co. KG, 01844 Neustadt in Sachsen (DE)
(72) Erfinder: Richter, André, 01796 Pirna (DE)
(74) Vertreter: Lippert, Stachow & Partner

(57) **Zusammenfassung**

Die Erfindung betrifft eine Vorrichtung zum Stabilisieren der Enden von Kunststoffrohren während des Transportes und der Lagerung. Durch die Erfindung soll eine Vorrichtung zum Stabilisieren der Enden von Kunststoffrohren geschaffen werden, mit der eine hinreichende Stabilisierung des Querschnitts auch von besonders großen Rohren gewährleistet wird, die ausreichend fest montierbar und die zudem ohne besonderen Aufwand wieder entfernbar ist. Erreicht wird das durch einen runden scheibenförmigen Grundkörper aus einem formstabilen harten Kunststoff in Form einer in die Rohrenden einsetzbaren Stützscheibe (1), wobei zumindest deren Außenrand (4) verformbar ist und in einen leicht kegligen Abschnitt (5) ausläuft, dessen kleinerer Durchmesser kleiner als der Innendurchmesser des Kunststoffrohres (2) ist und wobei der Durchmesser des Außenrandes (4) der Stützscheibe (1) größer ist, als der Innendurchmesser des Kunststoffrohres (2).

## Beschreibung

Die Erfindung betrifft eine Vorrichtung zum Stabilisieren der Enden von Kunststoffrohren während des Transportes und der Lagerung.

Kunststoffrohre werden als Ein- oder Mehrschichtrohre hergestellt und bestehen größtenteils aus einem unvernetzten Polyethylen in Form von PE 80 HD, oder PE 100 HD (HD: hohe Dichte) oder PE 100 HD RC (RC: resist to crack). RC Materialien sind gegen langsames Risswachstum infolge von Beschädigungen oder Punktbelastungen der Rohrwand besonders resistent, besitzen ansonsten die gleichen Eigenschaften wie PE 100 HD - Rohre. Auch kommen Rohre aus Polypropylen (PP) zum Einsatz.

Die Rohre aus Kunststoff werden für verschiedenste Transportzwecke von flüssigen, gasförmigen oder zumindest fließfähigen Medien, drucklos oder unter Druck, eingesetzt. Da solche Kunststoffrohre nicht endlos transportiert werden können, müssen diese zum Transport in vorgegebene Längen geschnitten und zum Montageort transportiert werden. In Abhängigkeit von den Rohrdimensionen und den verwendeten Kunststoffen können die Rohre entweder als Wickel auf einer Trommel, oder in einem Gebinde aus gestapelten Rohren, transportiert werden.

Am Montageort werden die Rohre dann durch Muffen- oder Stumpfschweißen zu Rohrsträngen zusammengefügt. Die hierfür verwendeten Technologien sind bestens bekannt und erlauben die Herstellung von Rohrverbindungen mit höchster Qualität und mit einer sehr hohen Nutzungsdauer. Das bedeutet, dass die Wandungen der Rohrenden ganzflächig und ohne Einschluss von Fehlstellen miteinander stoffschlüssig verbunden werden müssen. Das setzt auch voraus, dass der Querschnitt der Rohrenden hinreichend rund ist, so dass diese somit exakt aufeinander passen.

Voraussetzung hierfür ist eine sehr hohe Präzision beim Zusammenfügen der Rohrenden und eine hohe Passgenauigkeit der Rohrenden selbst, was zumeist mit entsprechenden Vorrichtungen, ggf. unter Zuhilfenahme einer Runddrückvorrichtung, erreicht wird. Auch müssen Toleranzvorgaben beim Muffenschweißen unbedingt eingehalten werden, um sicherzustellen, dass die Rohrenden überhaupt in die Muffe geschoben werden können und dass die Rohrwand ganzflächig innen an der Muffe anliegt. Andernfalls ist infolge von Spalten zwischen der Rohraußenwand und der Muffeninnenseite kein sicherer ganzflächiger Schweißvorgang möglich.

Diese Voraussetzungen können aber nicht so einfach erfüllt werden, weil die beschriebenen Kunststoffrohre keine starren Gebilde sind, sondern infolge einer gewissen Plastizität und Nachgiebigkeit des Kunststoffes insbesondere im Bereich der Rohrenden durch äußere Kräfte einer mehr oder weniger stark ausgeprägten Ovalisierung unterliegen. Das bedeutet, dass sich der ursprünglich mit dem Formwerkzeug im Extruder erzeugte runde Querschnitt mit der Zeit schwerkraft- und/oder belastungsbedingt verändert und sich speziell im Bereich der Rohrenden in einen mehr oder weniger ausgeprägten ovalen Querschnitt verändert. Diese Wirkung wird bei einer unsachgemäßen oder besonders langen Lagerung der Kunststoffrohre deutlich verstärkt. Außerdem fallen die Rohrenden beim Ablängen infolge interner Spannungen, die beim Extrudieren eingeprägt werden, geringfügig nach innen ein. Das hat dann beim Muffenschweißen zur Folge, dass Teile des Rohrumfanges nicht an der Muffe anliegen und somit ein Schweißvorgang in diesem Bereich unmöglich ist.

Einen gewissen Schutz der Rohrenden bieten Verschlusskappen, die die Rohrenden außen umschließen und die zugleich beim Transport der Rohre ein mögliches Eindringen von Fremdkörpern in das Rohrinnere verhindern sollen.

Der Erfindung liegt nun die Aufgabe zugrunde, eine Vorrichtung zum Stabilisieren der Enden von Kunststoffrohren zu schaffen, mit der eine hinreichende Stabilisierung des Querschnitts auch von besonders großen Rohren gewährleistet wird, die ausreichend fest montierbar und die zudem ohne besonderen Aufwand wieder entfernbar ist.

Die der Erfindung zugrunde liegende Aufgabe wird gelöst durch einen runden scheibenförmigen Grundkörper aus einem formstabilen aber harten Kunststoff in Form einer in die Rohrenden einsetzbaren Stützscheibe, wobei zumindest der Außenrand verformbar ist und der in einen leicht kegligen Abschnitt ausläuft, dessen kleinerer Durchmesser kleiner als der Innendurchmesser des Kunststoffrohres ist und wobei der Durchmesser des Außenrandes der Stützscheibe größer ist, als der Innendurchmesser des Kunststoffrohres.

Eine derart gestaltete Stützscheibe lässt sich leicht in das Rohrende des Kunststoffrohres einsetzen und anschließend durch Eindrücken in diesem befestigen. Das Eindrücken sollte soweit erfolgen, bis der Stützring einen geringen Überstand von ca. 1 cm über dem Rand des Kunststoffrohres aufweist. Die Stützscheibe dient zugleich als Ersatz für den sonst verwendeten Deckel.

Durch die erfindungsgemäße Ausgestaltung der Stützscheibe wird beim Eindrücken in das Kunststoffrohr eine gute Stabilisierung und Formgebung des Rohrendes erreicht, weil eine ausreichend große Kontaktfläche zum Kunststoffrohr entsteht. Infolge der nur örtlichen Verformung des Randes der Stützscheibe im plastischen Bereich durch das Eindrücken wird wegen der auf das Rohrende einwirkenden radialen Kräfte eine sichere Befestigung der Stützscheibe im Kunststoffrohr erreicht. Ein selbsttätiges Lösen der Stützscheibe ist dadurch ausgeschlossen.

Weiterhin sollte die Dicke der Stützscheibe in einem Mindestverhältnis des Durchmessers des Kunststoffrohres zur Dicke der Stützscheibe von 5 - 10 stehen, so dass auch bei Rohren mit großem Durchmesser und großer Wandstärke und folglich auch einem entsprechend großen Durchmesser der Stützscheibe diese selbst eine ausreichende Stabilität besitzt und somit eine gute Stabilisierung des Kunststoffrohres erreicht wird. Die Dicke der Stützscheibe sollte bei 5 - 8 cm liegen.

Um eine unkomplizierte Montage sowie gute mechanische Stabilität zu gewährleisten, ist die Stützscheibe einstückig ausgebildet.

Es ist von Vorteil, wenn der Kegelwinkel des kegligen Abschnitts des Außenrandes der Stützscheibe bei wenigen Grad liegt, weil dadurch einerseits ein Einsetzen der Stützscheibe mit vertretbarem Kraftaufwand ermöglicht wird und andererseits ein sicherer Sitz erreicht wird.

In einer besonderen Ausgestaltung der Erfindung besteht die Stützscheibe insgesamt aus einem unelastischen verformbaren aber harten Schaumstoff. Die Stützscheibe kann beispielsweise durch ein Spritzgussverfahren hergestellt werden.

Besonders geeignet sind als Schaumstoff expandierter Polystyrol-Hartschaum (EPS) oder expandiertes Polypropylen (EPP) wodurch eine hohe Formstabilität und Festigkeit der Stützscheibe gewährleistet wird. Der Außenrand der Stützscheibe kann auch profiliert ausgeführt sein, beispielsweise in Form einer Riffelung, sodass insbesondere bei großen Stützscheiben durch die etwas leichtere Verformbarkeit des Außenrandes das Einsetzen in das Rohrende etwas erleichtert wird.

In Fortführung der Erfindung ist in die Stützscheibe eine Ausziehhilfe eingearbeitet.

Die in der Stützscheibe ausgebildete Ausziehhilfe kann aus einem zentrisch in dieser ausgebildeten durchgehenden Griffloch bestehen, das durch eine einstückig mit der Stützscheibe verbundene und aus dem Griffloch ausbrechbare Verschlussplatte verschlossen ist.

Alternativ können auch zwei im Abstand zueinander angeordnete Griffmulden in der Stirnseite der Stützscheibe vorgesehen sein.

Um ein sicheres Ergreifen der Stützscheibe zu erreichen, sind die Griffmulden in der Tiefe mit jeweils einer umlaufenden oder teilweisen Hinterschneidung zur Aufnahme der Fingerspitzen versehen.

Eine andere Ausgestaltung für die Griffmulden besteht darin, in einer Stirnseite der Stützscheibe zwei Öffnungen bzw. Löcher im Abstand zueinander vorzusehen, die sich schräg in Richtung zur Mittelachse in die Tiefe der Stützscheibe erstrecken.

Die Öffnungen oder Löcher können auch als Durchgangslöcher ausgebildet sein.

Eine weitere Fortführung der Erfindung ist dadurch gekennzeichnet, dass auf einer der Stirnseiten der Stützscheibe ein Schriftzug, beispielsweise mit Herstellerangaben und den Rohrabmessungen, für die die entsprechende Stützscheibe verwendbar ist, eingeprägt ist.

Die Erfindung wird nachfolgend an einem Ausführungsbeispiel näher erläutert. In den zugehörigen Zeichnungen zeigen:
- Fig. 1:: eine schematische Draufsicht auf eine erfindungsgemäße Stützscheibe;
- Fig. 2:: eine nicht maßstabsgerechte Seitenansicht der Stützscheibe;
- Fig. 3:: eine schematische Draufsicht auf eine mit Griffmulden ausgestattete Stützscheibe;
- Fig. 4:: eine Seitenansicht der Stützscheibe mit einer Griffmulde sowie einer Hinterschneidung; und
- Fig. 5:: eine Seitenansicht einer Stützscheibe mit einer Ausziehhilfe in Form von schräg eingebrachten Öffnungen oder Löcher.

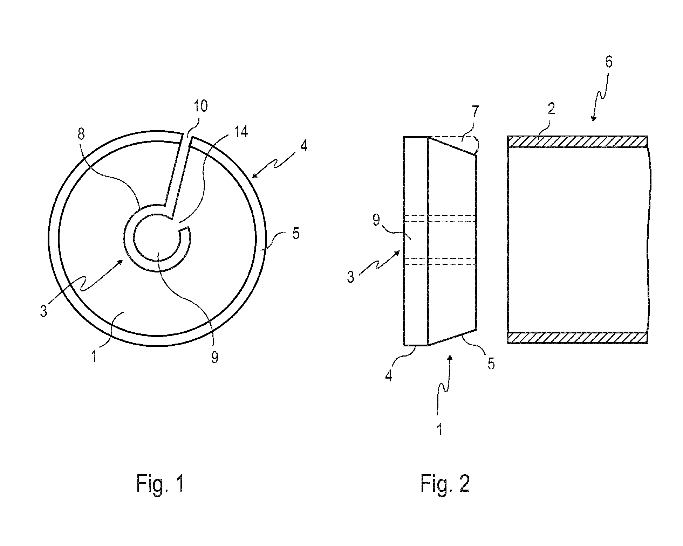

Die erfindungsgemäße Stützscheibe 1 für ein Kunststoffrohr 2 ist einteilig ausgebildet und besteht aus einem runden scheibenförmigen Grundkörper aus einem formstabilen Kunststoff, der mit einer Ausziehhilfe 3 und einem verformbaren Außenrand 4 versehen ist, der in einen leicht kegligen Abschnitt 5 ausläuft. Der kleinere Durchmesser des kegligen Abschnitts 5 ist kleiner, als der Innendurchmesser des Kunststoffrohres 2, wohingegen der Durchmesser des Außenrandes 4 der Stützscheibe 1 geringfügig größer ist, als der Innendurchmesser des Kunststoffrohres 2 (Fig. 1, 2).

Die Stützscheibe 1 sollte aus einem un- oder gering elastischen, in Grenzen verformbaren Schaumstoff, wie beispielsweise einem expandierten Polystyrol-Hartschaum (EPS), einem expandierten Polypropylen (EPP) oder einem entsprechenden anderen Material beispielsweise durch Spritzgießen oder Ausschneiden hergestellt werden. Eine aus diesem Material gefertigte Stützscheibe 1 besitzt einerseits ein geringes Gewicht, lässt sich daher gut handhaben und ist andererseits mechanisch sehr stabil.

Die Dicke der Stützscheibe 1 sollte in einem Mindestverhältnis des Durchmessers des Kunststoffrohres 2 zur Dicke der Stützscheibe 1 von etwa 5 - 10 stehen, so dass auch bei Kunststoffrohren 2 mit großem Durchmesser und großer Wandstärke und folglich auch einem entsprechend großen Durchmesser der Stützscheibe 1 diese selbst eine ausreichende Stabilität besitzt und somit auch eine gute Stabilisierung des Kunststoffrohres ermöglicht. Die Dicke der Stützscheibe sollte bei 5 - 8 cm liegen.

Das Eindrücken der Stützscheibe 1 in das Rohrende 6 des Kunststoffrohres 2 sollte soweit erfolgen, bis diese nur noch einen geringen Überstand zum Rand des Kunststoffrohres 2 von etwa 1 cm aufweist, also etwas hervorsteht.

Bei diesem Vorgang wird der Außenrand 4 der Stützscheibe 1 im plastischen Bereich etwas eingedrückt, wodurch diese im Rohrende 6 des Kunststoffrohres festgeklemmt wird, bis ausreichende radiale Kräfte auf das Kunststoffrohr einwirken, welche die Stützscheibe 1 im Rohrende 6 ausreichend fest halten. Durch die von innen auf das Rohrende 6 ausgeübten radialen Kräfte wird das Rohrende 6 zugleich stabilisiert und somit eine Ovalisierung der Rohrenden 6 sicher verhindert.

Bei Kunststoffrohren 2 mit größerem Durchmesser kann das Eindrücken der Stützscheibe 1 auch mit einem geeigneten Hilfsmittel, z.B. einer Andruckplatte o.dgl., erfolgen, um eine sonst mögliche Beschädigung der Stützplatte 1 zu vermeiden.

Der Kegelwinkel 7 des kegligen Abschnitts 5 des Außenrandes 4 der Stützscheibe 1 sollte bei wenigen Grad, z.B. bei 2° - 5°, liegen. Dadurch wird einerseits ein Einsetzen der Stützscheibe 1 in das Kunststoffrohr mit vertretbarem Kraftaufwand ermöglicht und andererseits ein sicherer kraftschlüssiger Sitz der Stützscheibe 1 erreicht.

Der Außenrand der Stützscheibe 1 einschließlich des kegligen Abschnitts 5 kann auch profiliert ausgeführt sein, beispielsweise in Form einer Riffelung (nicht dargestellt), was insbesondere bei großen Stützringen 1 durch die dadurch etwas leichtere Verformbarkeit des Außenrandes 4 das Einsetzen der Stützscheibe 1 in das Kunststoffrohr erleichtert.

Die in der Stützscheibe 1 ausgebildete Ausziehhilfe 3 kann aus einem zentrisch in dieser ausgebildeten durchgehenden Griffloch 8 bestehen, das durch eine einstückig mit der Stützscheibe 1 verbundene und aus dem Griffloch 8 ausbrechbare Verschlussplatte 9 verschlossen ist (Fig. 1). Es versteht sich, dass der Durchmesser des Griffloches 8 so gewählt werden muss, dass eine Hand bequem hindurch gesteckt werden kann.

Die Stützscheibe 1 kann auch mit Hilfe einer üblichen Heißdrahtvorrichtung aus einem größeren Materialblock geschnitten werden. Um die Stützscheibe 1 einstückig in einem Schneidvorgang herzustellen, wird mit dem auf die Schneidtemperatur aufgewärmten Draht der Heißdrahtvorrichtung zuerst die Außenkontur der Stützscheibe 1 ausgeschnitten und anschließend das Griffloch 8 geschnitten, indem zunächst ein radialer Schlitz 10 eingeschnitten und danach das Griffloch 8 und zugleich die Verschlussplatte 9 durch Führen des Heißdrahtes auf einer Kreisbahn um den Mittelpunkt der Stützscheibe 1 ausgebildet werden. Dabei darf natürlich kein Vollkreis ausgeführt werden, sondern der Schneidvorgang muss vor dem Erreichen des radialen Schlitzes 10 beendet werden, so dass ein schmaler Steg 14 stehen bleibt, der die Verschlussplatte 9 sicher im Griffloch 8 hält.

Zum Entnehmen der Stützscheibe 1 aus dem Rohrende 6 muss dann lediglich die Verschlussplatte 9 ausgebrochen werden, so dass dann eine Hand hindurchgeführt und die Stützscheibe 1 durch einen kräftigen Ruck herausgezogen werden kann.

Der radiale Schlitz 6 hat den weiteren Vorteil, dass dadurch die Stützscheibe 1 in geringem Maße radial elastisch zusammengedrückt werden kann, was insbesondere bei sehr großen Abmessungen der Stützscheibe 1 von Vorteil sein kann, da dadurch das Einsetzen in ein Kunststoffrohr erleichtert wird.

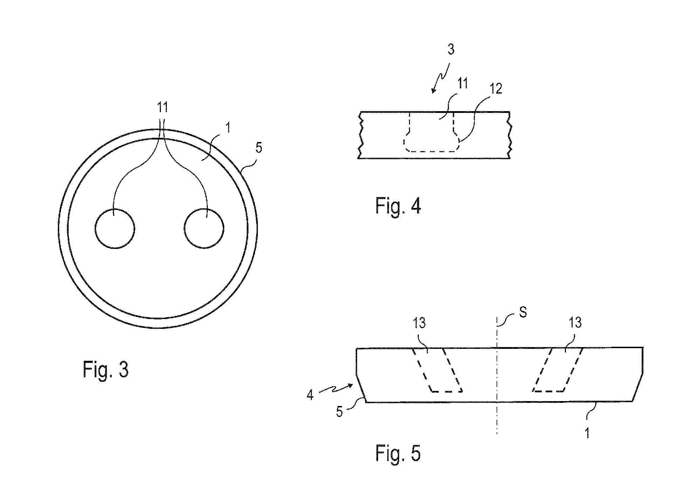

Alternativ können auch zwei im Abstand zueinander angeordnete Griffmulden 11 in der Stirnseite der Stützscheibe 1 vorgesehen sein (Fig. 3, 4).

Um ein sicheres Ergreifen der Stützscheibe 1 zu gewährleisten, sind die Griffmulden 11 in der Tiefe mit jeweils einer umlaufenden oder zumindest teilweisen Hinterschneidung 12 zur Aufnahme der Fingerspitzen versehen (Fig. 4).

Eine andere Ausgestaltung für die Griffmulden 11 besteht darin, zwei Öffnungen bzw. Löcher 13 im Abstand zueinander vorzusehen, die sich von einer Stirnseite der Stützscheibe 1 schräg in Richtung zu deren Symmetrieachse S in die Tiefe der Stützscheibe 1 erstrecken (Fig. 5). Auch bei dieser Ausgestaltung wird ein sicheres Ergreifen der Stützscheibe 1 ermöglicht.

Die Öffnungen oder Löcher 13 können auch als Durchgangslöcher ausgebildet sein.

Schließlich kann während der Fertigung der Stützscheibe 1 auf einer ihrer Stirnseiten ein Schriftzug mit Herstellerangaben und den Rohrabmessungen o.dgl., für die die entsprechende Stützscheibe verwendbar ist, eingeprägt werden.

### Bezugszeichenliste

- 1: Stützscheibe
- 2: Kunststoffrohr
- 3: Ausziehhilfe
- 4: Außenrand
- 5: kegliger Abschnitt
- 6: Rohrende
- 7: Kegelwinkel
- 8: Griffloch
- 9: Verschlussplatte
- 10: radialer Schlitz
- 11: Griffmulde
- 12: Hinterschneidung
- 13: Öffnung oder Loch
- S: Symmetrieachse

## Patentansprüche

1. Vorrichtung zum Stabilisieren der Enden von Kunststoffrohren, **gekennzeichnet durch** einen runden scheibenförmigen Grundkörper aus einem formstabilen harten Kunststoff in Form einer in die Rohrenden einsetzbaren Stützscheibe (1), wobei zumindest deren Außenrand (4) verformbar ist und in einen leicht kegligen Abschnitt (5) ausläuft, dessen kleinerer Durchmesser kleiner als der Innendurchmesser des Kunststoffrohres (2) ist und wobei der Durchmesser des Außenrandes (4) der Stützscheibe (1) größer ist, als der Innendurchmesser des Kunststoffrohres (2).

2. Vorrichtung nach Anspruch 1, **dadurch gekennzeichnet, dass** die Dicke der Stützscheibe (1) in einem Mindestverhältnis des Durchmessers des Kunststoffrohres (2) zur Dicke der Stützscheibe (1) von ca. 5 - 10 steht.

3. Vorrichtung nach Anspruch 1 und 2, **dadurch gekennzeichnet, dass** die Stützscheibe (1) einteilig ausgebildet ist.

4. Vorrichtung nach einem der Ansprüche 1 bis 3, **dadurch gekennzeichnet, dass** der Kegelwinkel des kegligen Abschnitts (5) des Außenrandes (4) der Stützscheibe (1) bei wenigen Grad liegt.

5. Vorrichtung nach einem der Ansprüche 1 bis 4, **dadurch gekennzeichnet, dass** die Stützscheibe (1) aus einem unelastischen verformbaren aber harten Schaumstoff besteht.

6. Vorrichtung nach Anspruch 5, **dadurch gekennzeichnet, dass** die Stützscheibe (1) aus einem expandierten Polystyrol-Hartschaum oder einem expandierten Polypropylen besteht.

7. Vorrichtung nach einem der Ansprüche 1 bis 6, **dadurch gekennzeichnet, dass** in die Stützscheibe (1) eine Ausziehhilfe (3) eingearbeitet ist-

8. Vorrichtung nach Anspruch 7, **dadurch gekennzeichnet, dass** die in der Stützscheibe (1) ausgebildete Ausziehhilfe (3) aus einem zentrisch in dieser ausgebildeten Griffloch (8) besteht, das durch eine einstückig mit der Stützscheibe (1) verbundene und aus dem Griffloch (8) ausbrechbare Verschlussplatte (9) weitgehend verschlossen ist.

9. Vorrichtung nach Anspruch 7, **dadurch gekennzeichnet, dass** als Ausziehhilfe (3) aus zwei im Abstand zueinander in der Stirnseite der Stützscheibe (1) angeordneten Griffmulden (11) besteht.

10. Vorrichtung nach Anspruch 9, **dadurch gekennzeichnet, dass** die Griffmulden (11) in der Tiefe mit jeweils einer umlaufenden oder teilweisen Hinterschneidung (12) zur Aufnahme der Fingerspitzen versehen sind.

11. Vorrichtung nach Anspruch 9, **dadurch gekennzeichnet, dass** die Griffmulden (11) als zwei im Abstand zueinander angeordnete Öffnungen bzw. Löcher (13) ausgebildet sind, die sich schräg in Richtung zur Mittelachse der Stützscheibe (1) in die Tiefe erstrecken.

12. Vorrichtung nach Anspruch 11, **dadurch gekennzeichnet, dass** die Öffnungen oder Löcher (13) als Durchgangslöcher ausgebildet sind.

13. Vorrichtung nach einem der Ansprüche 1 bis 12, **dadurch gekennzeichnet, dass** der Außenrand (4) der Stützscheibe (1) profiliert ist.

14. Vorrichtung nach Anspruch 13, **dadurch gekennzeichnet, dass** der Außenrand (4) der Stützscheibe (1) mit einer Riffelung versehen ist.

15. Vorrichtung nach einem der Ansprüche 1 bis 14, **dadurch gekennzeichnet, dass** auf einer der Stirnseiten der Stützscheibe (1) ein Schriftzug eingeprägt ist.
